# EUROPEAN PATENT APPLICATION

(11) **EP 3 706 389 A1**
(43) Date of publication of application: **09.09.2020**
(21) Application number: 20161617.4
(22) Date of filing: 06.03.2020
(51) Int. Cl.: H04L 29/06, H04L 29/08, G06Q 20/08

(54) **SYSTEMS AND METHODS FOR PROVIDING ELECTRONIC NOTIFICATIONS**

(30) Priority: 07.03.2019 US 201916295683
(71) Applicant: Visa International Service Association, San Francisco, California 94128 (US)
(72) Inventor: AGRAWAL, Shobhit, San Francisco, California 94128-8999 (US); GUPTA, Anurag, San Francisco, California 94128-8999 (US); SINGH, Richa, San Francisco, California 94128-8999 (US); GODOLJA, Elsi, San Francisco, California 94128-8999 (US); MAHARJAN, Surya, San Francisco, California 94128-8999 (US)
(74) Representative: EIP

(57) **Abstract**

A method for providing electronic updates comprising receiving at least one account update from an account server relating to activity in a user account and determining that the account update is associated with an activity category. Based on a determination generating an activity notification and, in response to receiving the at least one account update, pushing the activity notification to a user computing device to trigger a notification on the user computing device.

## Description

### FIELD OF THE INVENTION

The invention relates to systems and methods for monitoring and providing electronic updates.

### BACKGROUND

It is desirable to provide access to up-to-date information in order to troubleshoot problems, assess electronic business trends, guard against fraud, etc. Traditionally, this type of information may be difficult to access or may not be efficiently acquirable in a useful timeframe.

### SUMMARY

The following presents a simplified summary of the present disclosure in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.

In some embodiments, the disclosure describes providing a system for receiving updates related to a user account, such as an electronic business account and determining whether the updates fall into one or more activity categories. Depending on whether the activity categories correspond to activity notification selections, transmitting activity notifications to a user computing device.

Further non-limiting embodiments are set forth in the following numbered clauses:
Clause 1: A processor-implemented method for providing electronic business updates, the method comprising: receiving, by one or more processors via a digital communication network, a user credential associated with a user account of a user; transmitting, by the one or more processors via the digital communication network, the user credential to an account server to gain access to the user account on the account server; receiving, by the one or more processors via the digital communication network, at least one account update from the account server, each of the at least one account update relating to activity in the user account; determining, by the one or more processors, that each of the at least one account update is associated with one of a plurality of activity categories including a payment alert and a fraud alert; based on a determination that the at least one account update is associated with a payment alert, generating, by the one or more processors, a first activity notification; and in response to receiving the at least one account update, pushing, by the one or more processors via the digital communication network, the first activity notification to a user computing device, the first activity notification configured to trigger a notification on the user computing device.
Clause 2: A processor-implemented method for providing electronic business updates, the method comprising: receiving, via a digital communication network, an access token providing authorization to a user account of a user; transmitting, via the digital communication network, the access token to an account server to gain access to the user account on the account server; receiving, via the digital communication network, at least one account update from the account server via an HTTP POST request, each of the at least one account update relating to activity in the user account; determining, via the one or more processors, that each of the at least one account update is associated with one of a plurality of activity categories; based on the a determination that the at least one account update is associated with one of the plurality of activity categories, generating, via the one or more processors, at least one activity notification corresponding to the at least one account update; and transmitting, via the digital communication network, the at least one activity notification to a user computing device, the at least one activity notification configured to trigger a notification on the user computing device.
Clause 3: The method of clause 2, wherein the at least one activity notification is transmitted to the user computing device in substantially real time.
Clause 4: The method of clause 2 or 3, further comprising receiving at least one notification response in response to the at least one activity notification, the at least one notification response including instructions related to the corresponding at least one account update.
Clause 5: The method of any of clauses 2 to 4 further comprising: receiving, via the digital communication network, a payment instruction to transmit a payment to at least one payment recipient from the user computing device; and transmitting, via the digital communication network, the payment instruction to a payment server, the payment instruction configured to trigger payment to an account associated with the at least one payment recipient.
Clause 6: An application server comprising: a processor; and a computer readable medium comprising instructions, wherein the processor is configured to execute the instructions to perform any of the aforementioned methods.

### BRIEF DESCRIPTION OF THE DRAWINGS

The invention may be better understood by references to the detailed description when considered in connection with the accompanying drawings. The components in the figures are not necessarily to scale, emphasis instead being placed upon illustrating the principles of the invention. In the figures, like reference numerals designate corresponding parts throughout the different views.
Fig. 1 is an illustration of the elements of an embodiment of a system that includes a system for providing electronic notifications as disclosed herein;
Fig. 2 is a schematic illustration of elements of an embodiment of an example computing device;
Fig. 3 is a schematic illustration of elements of an embodiment of a server-type computing device;
Fig. 4 is a block diagram illustrating system elements for an embodiment of an electronic notification system in accordance with the current disclosure;
Fig. 5 is a flow chart of an embodiment of a process for using the electronic notification system described herein;
Fig. 6 is a flow chart of another embodiment of a process for using the electronic notification system described herein;
Figs. 7A-7K are screenshots of an embodiment of a user interface diagram illustrating example features of an embodiment of a graphical user interface for the electronic notification system as described herein; and
Fig. 8 is a flow chart of an embodiment of a process for using the electronic notification system described herein.

Persons of ordinary skill in the art will appreciate that elements in the figures are illustrated for simplicity and clarity so not all connections and options have been shown to avoid obscuring the inventive aspects. For example, common but well-understood elements that are useful or necessary in a commercially feasible embodiment are not often depicted in order to facilitate a less obstructed view of these various embodiments of the present disclosure. It will be further appreciated that certain actions and/or steps may be described or depicted in a particular order of occurrence while those skilled in the art will understand that such specificity with respect to sequence is not actually required. It will also be understood that the terms and expressions used herein are to be defined with respect to their corresponding respective areas of inquiry and study except where specific meaning have otherwise been set forth herein.

### DETAILED DESCRIPTION

The present invention now will be described more fully hereinafter with reference to the accompanying drawings, which form a part hereof, and which show, by way of illustration, specific exemplary embodiments by which the invention may be practiced. These illustrations and exemplary embodiments are presented with the understanding that the present disclosure is an exemplification of the principles of one or more inventions and is not intended to limit any one of the inventions to the embodiments illustrated. The invention may be embodied in many different forms and should not be construed as limited to the embodiments set forth herein; rather, these embodiments are provided so that this disclosure will be thorough and complete, and will fully convey the scope of the invention to those skilled in the art. Among other things, the present invention may be embodied as methods or devices. Accordingly, the present invention may take the form of an entirely hardware embodiment, an entirely software embodiment or an embodiment combining software and hardware aspects. The following detailed description is, therefore, not to be taken in a limiting sense.

The electronic notification system and methods described herein may provide users with an improved way to monitor their electronic activities in substantially real time. In some embodiments, the electronic notification system may provide updates on transactions, provide alerts related to potentially fraudulent activities or transactions, allow actions to be taken regarding suspected fraudulent activities, provide payment to electronic business vendors, track daily electronic business spending, generate electronic business summary reports, etc. In some embodiments, the system may include an electronic notification application that may be included on a user's computing device (e.g., smartphone, tablet, lap top computer, desktop computer, etc.) that may execute processes associated with the features described above. For example, the electronic notification application may provide its users with substantially real time notifications relating to payments, refunds, deposits, and fraud alerts. In some embodiments, the notifications may be pushed to a user's computing device without any additional input from the user.

In some embodiments, the electronic notification application of the electronic notification system may provide substantially real time fraud alerts to its users via the users computing device. Substantially real time fraud alerts may enable users of the system to quickly take action to prevent or mitigate fraudulent activities. In some embodiments, a user may use the electronic notification application to view daily, weekly, hourly, yearly, etc., summary snapshots for various types of transactions in which the electronic business may be involved, and provide a graphical user interface to view and respond too alerts and notifications.

Traditionally, a user or electronic business owner may need to log on and actively request particular types of transactions to obtain the latest information on the ongoing activities of the electronic business. The electronic notification system may provide, in some embodiments, a practical solution to the technical problem of accessing information about electronic business in substantially real time in such a way that the user may react to and remedy any problems, if necessary. To provide a technical solution to the technical problems involved with providing the electronic notification features described herein, the disclosure describes, in some embodiments, an electronic account server that may use token-based authorization to monitor activities associated with a user account related to a notification service or account server. As the electronic account server identifies events occurring related to the account server accounts, the electronic account server may push alerts to the user's computing device in the form of notifications. In some embodiments, the electronic account server may monitor activities or events on user accounts hosted directly on the electronic account server or other accessible server accounts.

In some embodiments, the disclosure describes a processor-implemented method for providing electronic updates. The method may include receiving, via a digital communication network, a user credential associated with a user account of a user, and transmitting, via the digital communication network, the user credential to an account server to gain access to the user account on the account server. The method may also include receiving, via the digital communication network, at least one account update from the account server, each of the at least one account update relating to activity in the user account and determining, via the one or more processors, that each of the at least one account update is associated with one of a plurality of activity categories including a first activity category and a second activity category. Based on the a determination that the at least one account update is associated with the first activity category, the method may include generating, via the one or more processors, a first activity notification and, in response to receiving the at least one account update, pushing, via the digital communication network, the first activity notification to a user computing device, the first activity notification configured to trigger a notification on the user computing device.

In another embodiment, the disclosure describes an electronic notification processor-readable non-transitory medium that may store processor-executable instructions issuable by a processor to transmit, via a digital communication network, a user credential to an application server, the user credential associated with a user account. The instructions issuable by the processor may also include to receive, via the digital communication network, an activity notification from the application server, where the activity notification corresponding to an account update indicates activity related to the user account. The instructions issuable by the processor may also include to display, via the processor, information related to the activity notification, where the activity notification provides a plurality of notification response options. The instructions issuable by the processor may also include to receive, via the processor, a user selection of one of the plurality of notification response options and, based on receiving the user selection, transmit, via the digital communication network, the user selection of one of the plurality of notification response options to the application server.

In another embodiment, the disclosure describes a processor-implemented method for providing electronic updates. The method may include receiving, via a digital communication network, an access token providing authorization to a user account of a user and transmitting, via the digital communication network, the access token to an account server to gain access to the user account on the account server. The method may include receiving, via the digital communication network, at least one account update from the account server via an HTTP POST request, where each of the at least one account update relating to activity in the user account. The method may include determining, via the one or more processors, that each of the at least one account update is associated with one of a plurality of activity categories. Based on the a determination that the at least one account update is associated with one of the plurality of activity categories, the method may include generating, via the one or more processors, at least one activity notification corresponding to the at least one account update and transmitting, via the digital communication network, the at least one activity notification to a user computing device where the at least one activity notification is configured to trigger a notification on the user computing device.

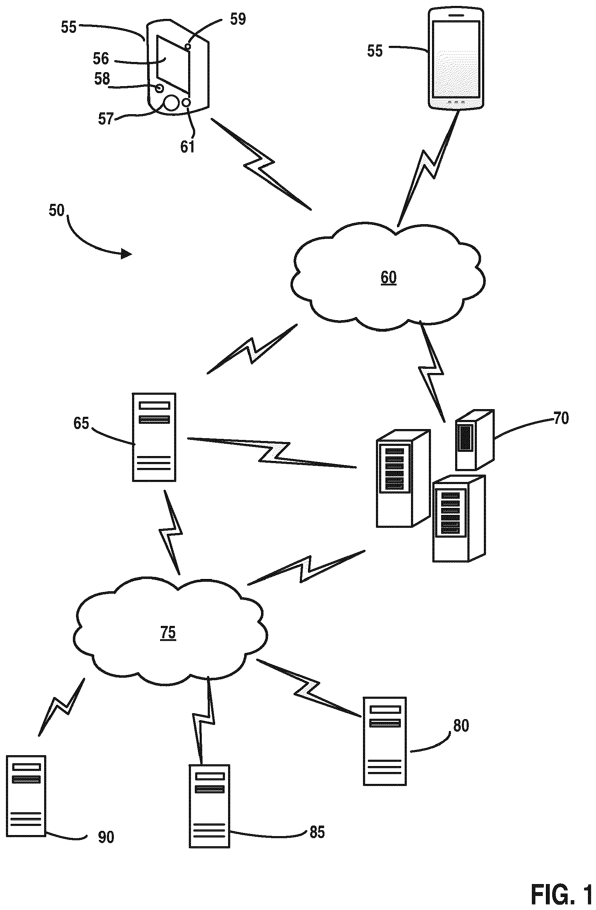

A high level illustration of some of the elements in a sample computing system 50 that may be physically configured to implement the electronic notification system and methods is illustrated in Fig. 1. The system 50 may include one or more user computing devices 55, such as smartphones or tablet computers, mobile computing devices, wearable mobile devices, desktop computers, laptop computers, or any other computing devices that allow users to interface with a digital communications network, such as digital communication network 60. Connection to the digital communication network 60 may be wired or wireless, and may be via the internet or via a cellular network or any other suitable connection service.

Various other computer servers may also be connected to via the digital communication network 60, such as an application server 65 and an account server 70. In some embodiments, the application server 65 may be included as a server within or be a part of the account server 70. The account server 70 may represent, for example, a credit card issuer, a bank, or another financial institution. Various of these servers or computer entities may also be connected through a secure payment network 75. The payment network 75 may be an electronic payment system used to accept, transmit, or process transactions made by users with payment cards for money, goods, or services, and to transfer information and funds among payment card issuers, merchants, payment card holders, payment processors, acquirers, etc. In the illustrated embodiment, at least the application server 65, the account server 70, a token server 80, a payment server 85, and a merchant server 90 may be connected via the payment network 75, but it is contemplated that other entities, such as one or more acquirer, may be connected as well. In some embodiments, it is contemplated that multiple payment servers associated with multiple different payment sources and/or multiple merchant servers associated with multiple different merchants may also be connected to the payment network 75. It is also contemplated that the account server 70 and application server 65 may also be connected to the one or more user computing devices 55 over the digital communication network 60.

In one embodiment, the computing device 55 may be a device that operates using a portable power source, such as a battery. The computing device 55 may also have a display 56 which may or may not be a touch sensitive display. More specifically, the display 56 may have a capacitance sensor, for example, that may be used to provide input data to the computing device 55. In other embodiments, an input pad 57 such as arrows, scroll wheels, keyboards, etc., may be used to provide inputs to the computing device 55. In addition, the computing device 55 may have a microphone 58 which may accept and store verbal data, a camera 59 to accept images and a speaker 61 to communicate sounds.

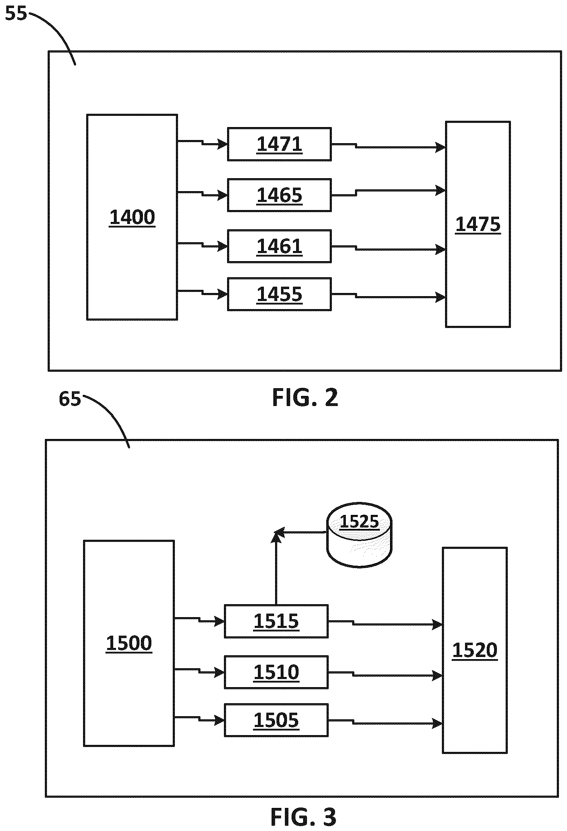

Fig. 2 is a simplified illustration of the physical elements that make up an embodiment of a computing device 55 and Fig. 3 is a simplified illustration of the physical elements that make up an embodiment of a server type computing device, such as the application server 65, but the merchant server 90, the token server 80, and the payment server 85 may reflect similar physical elements in some embodiments. Referring to Fig. 2, a sample computing device 55 is illustrated that is physically configured according to be part of the computing system 50 shown in Fig. 1. The user computing device 55 may have a processor 1451 that is physically configured according to computer executable instructions. In some embodiments, the processor can be specially designed or configured to optimize communication between the server 65 and the computing device 55 relating to the electronic notification system described herein. The computing device 55 may have a portable power supply 1455 such as a battery, which may be rechargeable. It may also have a sound and video module 1461 which assists in displaying video and sound and may turn off when not in use to conserve power and battery life. The computing device 55 may also have volatile memory 1465 and non-volatile memory 1471. The computing device 55 may have GPS capabilities that may be a separate circuit or may be part of the processor 1451. There also may be an input/output bus 1475 that shuttles data to and from the various user input/output devices such as a microphone, a camera 59, a display 56, or other input/output devices. The user computing device 55 also may control communicating with the networks, such as communications network 60 in Fig. 1, either through wireless or wired devices. Of course, this is just one embodiment of the user computing device 55 and the number and types of user computing devices 55 is limited only by the imagination.

The physical elements that make up an embodiment of a server, such as the application server 65, are further illustrated in Fig. 3. In some embodiments, the application server 65 is specially configured to run the electronic notification system as described herein. At a high level, the application server 65 may include a digital storage such as a magnetic disk, an optical disk, flash storage, non-volatile storage, etc. Structured data may be stored in the digital storage such as in a database. More specifically, the server 65 may have a processor 1500 that is physically configured according to computer executable instructions. In some embodiments, the processor 1500 can be specially designed or configured to optimize communication between a user computing device, such as computing device 55, and the server 65 relating to the payment selection service as described herein. The server 65 may also have a sound and video module 1505 which assists in displaying video and sound and may turn off when not in use to conserve power and battery life. The server 65 may also have volatile memory 1510 and non-volatile memory 1515.

A database 1525 for digitally storing structured data may be stored in the memory 1510 or 1515 or may be separate. The database 1525 may also be part of a cloud of servers and may be stored in a distributed manner across a plurality of servers. There also may be an input/output bus 1520 that shuttles data to and from the various user input devices such as a microphone, a camera, a display monitor or screen, etc. The input/output bus 1520 also may control communicating with the networks, such as communications network 60 and payment network 75, either through wireless or wired devices. In some embodiments, an electronic notification controller for running the electronic notification service through an electronic notification application may be located on the user computing device 55. However, in other embodiments, the electronic notification controller may be located on application server 65, or both the computing device 55 and the server 65. Of course, this is just one embodiment of the application server 65 and additional types of servers are contemplated herein.

In the embodiment illustrated in Fig. 1, the application server 65 may be connected to the merchant server 90 either through the digital communication network 60, through the payment network 75 or through other connections. In some embodiments, the merchant server 90 may be associated with any type of merchant offering goods or services for purchase with payment cards, whether those purchases are online or otherwise. For online purchases, the merchant server 90 or a group of servers may host a merchant website where the merchant's goods or services may be purchased by a user. In some embodiments, the electronic notification system may collect payment information from the user, such as payment card credentials, that may be used for the immediate transactions as well as for future purchases with the same or other merchants as further described herein. As such, the electronic notification system may consolidate the entities to which a user shares its confidential payment information. Specifically, the user may share its payment card information with the electronic notification system via software or other interface hosted by the system, and the electronic notification system may store the payment and other account information for use in future purchases. In some embodiments, the electronic notification system may also store information regarding rewards points, loyalty programs, or other benefits associated with the stored payment accounts. The electronic notification system may also be in contact with other payment account issuers to receive up-to-date information regarding the details of associated account benefits.

In some embodiments, the electronic notification system may be hosted on or otherwise run by the application server 65. In some embodiments, the electronic notification system may be hosted by another entity, such as an issuer using an payment server 85 or a merchant using a merchant server 90. In some embodiments, a user may access the application server 65 via a computing device 55 such as a smartphone, and may set up an account with the electronic notification system. The user may provide payment account or banking information for one or more payment accounts provided by one or more card issuers or associated with one or more merchants or banks. One or more of the payment accounts may be associated with any of a variety of benefit programs. The electronic notification system may store such payment account information associated with the user's account that can be retrieved at the user's request to complete e-commerce transactions. Purchases using payment information stored with the electronic notification system, however, may occur in any of a variety of ways. In some embodiments, the user may select a payment account or card stored through the electronic notification system for use performing a given transaction. As described in more detail below, the electronic notification system may determine which of a user's payment accounts to use for a given transaction based on the benefits available.

The computing device 55 may be able to communicate with a computer server or a plurality servers, such as the application server 65, the account server 70, payment servers 85, and merchant servers 90. The computing device 55 may be able to communicate in a variety of ways. In some embodiments, the communication may be wired such as through an Ethernet cable, a USB cable or RJ6 cable. In other embodiments, the communication may be wireless such as through Wi-Fi (802.11 standard), Bluetooth, cellular communication or near field communication devices. The communication may be direct to the server or may be through a digital communication network 60 such as cellular service, through the Internet, through a private network, through Bluetooth, etc.

In some embodiments, the application server 65 may be associated with the electronic notification system, and may send and receive information to and from a user computing device 55 associated with the user payment accounts of a user. Specifically, software may be included on the user computing device 55 allowing notifications to be received from the electronic notification system via the digital communications network 60. In some embodiments, the software may be an application, such as an electronic notification application, through which a user may access electronic business related information and data, complete transactions, money transfers, merchant or vendor purchases, etc. In some embodiments, the software may be an add-on to a web browser included on the user computing device 55. In some embodiments, the electronic notification system's software may be an application installed on the user computing device 55 that allows for the use of other applications on the user computing device, such as applications provided by a bank, online merchant, email service, payment provider, etc. In yet other embodiments, the electronic notification system may provide notifications using software native to the user computing device 55, such as SMS messaging or other notifications. In such embodiments, the electronic notification system may send notifications to the user computing device 55, such as are described in further detail below.

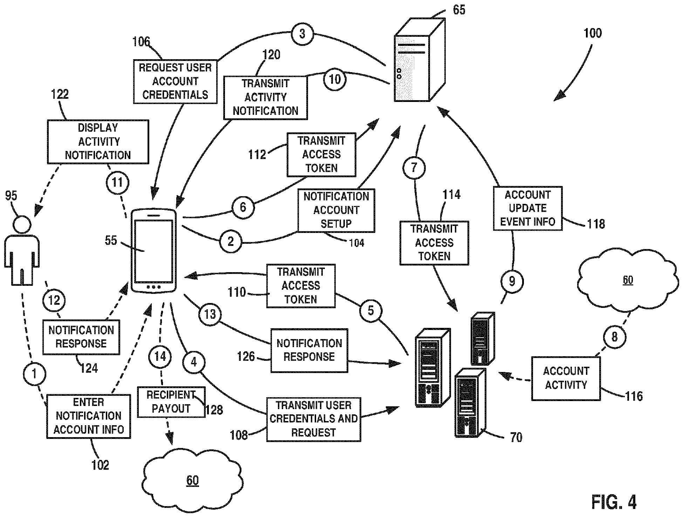

Fig. 4 is a data flow diagram generally illustrating an embodiment of an electronic notification system 100 that may monitor a user account of a user 95 and provide notifications and other information directly to a user's computing device 55. It should be understood by those skilled in the art that particular aspects of the flow diagram may be implemented in different ways in order to achieve the same or similar results, and the disclosure should not be considered limiting in that sense. In some embodiments, a user 95 may be associated with a user account hosted or otherwise run by or on an account server 70. In some embodiments, the account server 70 may be associated with a bank, a credit card issuer, a logistics company, or any other institution that may provide account services for an individual or electronic business. The user account may be a bank account associated with an electronic business operated or otherwise associated with the user, or may be another type of account used to conduct electronic business operations such as logistics, purchasing, inventory, sales, marketing, etc. Those of skill in the art should recognize that the user account may include multiple accounts that may be associated with the user 95 or associated with an electronic business of the user or an electronic business for which the user works. In some embodiments, the application server 65 and the account server 70 may be run by the same entity, and/or may be a single server or group of servers that are operating together.

At 102, a user 95 may use a computing device 55 associated with that user to set up a notification account associated with the application server 65, and at 104, he user computing device may transmit the notification account information to the application server 65. In some embodiments, setting up the notification account of the user 95 may include entering or selecting account information, such as the name of the user account associated with the account server, or otherwise identifying the user account and where it is hosted. In some embodiments, the user may enter user credentials such as a username and password used to identify and/or access the notification account from the user computing device 55 via a digital communication network such as the digital communication network 60. In some embodiments, setting up the notification account may include defining one or more activity categories for which the user 95 would like to receive notifications related to the user account hosted by the account server. The activity categories may be related to any of a variety of events related to the user or the user's electronic business that may result in an account update. For example, a customer may purchase an item or service from the user's electronic business, the electronic business may make a payment to a vendor or other entity, someone may make a return, or any other electronic business-related transactions. In any suitable instance, an account update may occur in which a change is made to the user account that relates to the electronic business event, and the type of change may vary depending on the nature of the event.

In some embodiments, during the notification account setup at 104, the user 95 may define or choose one or more activity categories within which some or all of the account updates or account activity related to the user account be included. For example, the user 95 may define a first activity category and a second activity category. In some embodiments, the first activity category may include account updates related to one or more customer purchases, and the second activity category may include account updates related to one or more vender payments. In some embodiments, a third activity category may include account updates that indicate potential fraudulent activity. The potential fraudulent activity may be identified in a variety of ways, including by recognizing purchases by users previously identified as participating in fraudulent activity, or by recognizing particularly patterns of sales or other events that have previously been identifies as being indicative of fraudulent account activity. In some embodiments, machine learning or other types of artificial intelligence may be applied by the application server 65 in order to learn to better predict and identify the types of transactions that may likely be fraudulent or otherwise undesirable. For example, the application server 65 may review previous transactions that have been found to be fraudulent, recognize particular patterns (e.g., frequency of purchases, customer information, or any combination of factors) that may tend to indicate fraud. In some embodiments, the application server 65 may recognize purchases or other transactions by customers that have a particular high rate of returns, for example. Other activity categories may relate to sales thresholds for a period of time (e.g., $1,000 of sales that day and/or $10,000 of sales that week), or a particular purchase or customer making purchases above a predetermined threshold (e.g., a single purchase over $2,000 or a single customer making purchases more than $2,000). Of course, one of skill in the art would understand that the variety and number of activity categories possible to define particular electronic business activities are substantially limitless.

In some embodiment, the notification account setup process at 104 may also include the user 95 selecting one or more activity categories for which the user would like to receive notifications, for example, via the user computing device. For example, the user 95 may select to receive a first activity notification related to account updates included in the first activity category, and receive a second activity notification related to account updates included in the second activity category. In such embodiments when the first activity category includes account updates related to one or more customer purchases, the first notification notifications may include notifications reporting or otherwise identifying customer purchases). In embodiments when the second activity category includes account updates related to one or more vendor payments, the second activity notifications may include notifications that vendor payments have been made from the user account. Of course, any combination of activity notifications based on any combination of activity categories may be selected by the user 95 or be predetermined by an electronic notification application. In some embodiments, the selection of activity notifications and defining of categories may occur via a graphical user interface (GUI) on the user computing device 55, such as a GUI running on an electronic notification application hosted by the application server 65.

In some embodiments, to complete the setup process using, for example, the electronic notification application running on the user computing device 55 and hosted by the application server 65, the application server may use OAuth or authorization standard to obtain authorization to access activities, events, or other information related to the user account hosted on the account server 70. In such embodiments, the application server 65 may recognize that authorization has not been obtained for the user account. The application server 65 may formulate an authorization request for the account server 70, encode the request, and, at 106, transmit the request to the user computing device, for example, as part of a redirect uniform resource locator (URL). Upon requesting and receiving the application server's redirect URL along with the authorization request, a browser running on the user computing device 55 or the electronic notification application itself may follow the redirect URL to the account server 70 or an authentication or authorization page related to the user account and hosted by the account server. The account server 70 may authenticate the user 95 or the user computing device 55, for example, by, at 108, requesting and receiving user credentials (e.g., username and password) associated with the user account. Once the user 95 is sufficiently authenticated, the account server 70 may receive and process the authorization request from the application server 65. The account server 70 may formulate an authentication response and, at 110, transmit the authentication response back to the user computing device 55. In some embodiments, the authentication response may include some formulation of user credentials to access the user account. In some embodiments, the account server 70 may include a redirect URL along with the authentication response that may direct the user computing device browser or the electronic notification application back to the application server 65. In some embodiments, the authentication response from the account server 70 may include an access token as the user credential that the application server 65 may use to gain direct access to the user account on the account server 70 on the user's behalf in order to identify account updates. In some embodiments, the authorization process described above may take place within the electronic notification application. For example, the electronic notification application may display the request for user credentials on the application, but direct the inputs to the account server for authentication.

Once the user computing device receives the authentication response and redirect URL to the application server 65, the user computing device may, at 112, transmit the authentication response (e.g., access token) to the application server 65. In some embodiments, the application server 65 may decode the authentication response and, at 114, transmit the user credential to the account server 70, thus granting access to the user account on the account server 70. In some embodiments, the user credential may be an access token received during the OAuth or other authorization process. In some embodiments, the application server 65 may then commence monitoring the user account on the account server for account updates in any of the one or more activity categories selected or identified by the user during set up.

At 116, an event may occur related to the user account. For example, a customer may make a purchase of a good or a service offered by the user's electronic business associated with the user account. Although Fig. 4 shows the account activity occurring via at digital communication network 60, it is contemplated that the activity may take place in any suitable medium, such as by an in-store purchase. At 118, an account update may occur related to the account activity, and that account updated may be detected and received by the application server 65. In some embodiments, the account update may be detected by the application server 65 using webhooks or other similar event detection protocol. In some embodiments, the application server 65 may implement one or more application programming interface (API) to monitor the user account for account updates. For example, when an account update event occurs as a result of a transaction or other electronic business activity, an event object may be created that may contain all the relevant information or data about the account update event (e.g., purchase price, quantity, store location, mode of payment, customer identification, etc.). In some embodiments, the event details may include the type of event, such as a transaction, fraud alert, payment, etc. In some embodiments, the account server 70 may transmit the event object to a URL associated with the application server 65, for example, in the form of an HTTP POST request. The application server 65 may then execute the HTTP POST request and analyze the data related to the account update event. In some embodiments, the account update event details are included in the POST request body as JavaScript Object Notation (JSON). In such embodiments, the application server 65 may parse the JSON into the account event details. In some embodiments, it is contemplated that the application server 65 would identify a trigger of an account updated event directly without the use of webhooks or other suitable notification protocols.

Once the application server 65 receives account update information from the account server 70, the application server my analyze the account update event details and determine whether the account update falls into any of the activity categories defined by the user 95 in the user notification account hosted on the application server. For example, the application server 65 may determine that the account update is a customer purchase, and place the account update in the first activity category as defined in the examples above. Of course, the account update may fall into other categories, or no categories that the user has defined. The application server 65 may then, in some embodiments, determine whether the user notification account has been set up to include any activity notifications relating to the first activity category. If no activity notifications have been defined, then the application server 65 may, in some embodiments, store the account update data for future reference or for inclusion in any of a variety of summaries or other services for the user notification account. If one or more activity notifications have been defined for the activity category in which the account update falls, the application server 65 may, at 120, transmit a first activity notification to the user computing device 55.

The activity notification may be configured to be displayed, at 122, by the user computing device 55 in at least one of a variety of ways. In some embodiments, the user computing device 55 may use native SMS, MMS, or other notification capability to display information related to the activity notification. In some embodiments, the user computing device 55 may display information related to the activity notification through the electronic notification application running on the user computing device. In these or other suitable notification methods, the user 95 may have previously selected which types of notifications to receive based on the type of activity category, frequency of the type of activity category, the amount of a purchase or payment, the particular customer or vendor involved, or any other suitable variable that may be predetermined and configured to handle a particular notification. For example, a user 95 may configure the user notification account to provide in-application activity notifications related to an activity category for normal customer purchases. In such embodiments, the user 95 may access and view the activity notifications through the electronic notification application when desired or when the application is accessed. The user 95 may, however, select that particular types of activity categories, such suspected fraud, be treated more urgently. For example, fraud-related activity notifications may be displayed using the user computing device's 55 native messaging or notification system, which may include interrupting other computing activity, activating an audible, tactile, and/or visual indicator through the user computing device's hardware, or any other suitable notification method contemplated to attract the user's attention.

In some embodiments, the activity notification displayed by the user computing device 55 may request a response from the user 95 in order to address a particular situation related to the user account and/or the user's electronic business. In some embodiments, the user 95 may select which activity categories may request a response, and the options for responding. For example, if the activity notification relates to a potentially fraudulent purchase or other transaction related to the user account, the activity notification may include a response option, such as, "cancel transaction" or "allow transaction." Of course, other responses are contemplated for this and other types of notification activities. Additionally, in some embodiments, responses to activity notifications may remain for a predetermined amount of time (e.g., 2 minutes or 5 minutes), before the system defaults to a predetermined default response selection. At 124, the user computing device 55 may receive a notification response from the user 95, and at 126, the notification response may be transmitted to the account server 70 either directly (as illustrated), or through the application server 65. The application server 65 or the account server 70 may then execute the designated response, such as by canceling or allowing the particular transaction.

In some embodiments, the activity category may related to a vendor payment that has been made or to a vendor payment coming due. In such embodiments, the application server 65 may transmit an appropriate activity notification to the user computing device 55, which may display the notification to the user 95. In some embodiments, the notification may include the option of responding, for example, to direct payment to the either immediately, at a selected time, or based on a predetermined timeline method. In some embodiments, the notification response at 124 may include an instruction to pay the vendor directly. The notification response may be transmitted directly to the account server 70 to execute payment at 126, or may be transmitted to the application server 65 and along to the account server 70. In some embodiments, the user notification account on the application server 65 may be set up to make payments directly to vendors, employees, or other payment recipients using APIs or other payment tools. In some embodiments, the application server 65 may transmit a payment instruction for a vendor or other payment recipient to a payment server, such as the payment server 85 described in Fig. 1. In some embodiments, the payment instruction may be configured to trigger payment to an account associated with at least one payment recipient, such as an electronic business vendor or a customer. In some embodiments, at 128, the electronic notification application running on the user computing device 55 may execute a payment or payout to a payment recipient through a direct person-to-person payment service, such as Visa Direct.

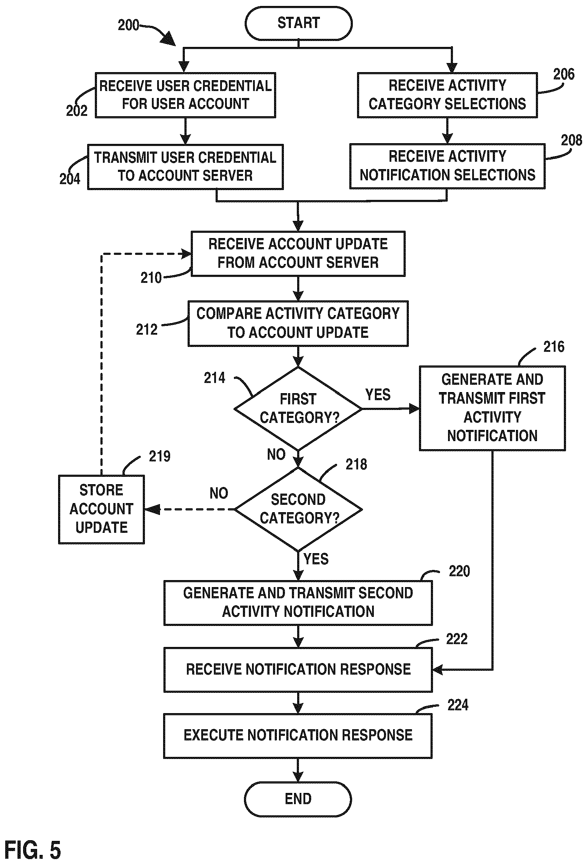

Fig. 5 illustrates an embodiment of a method 200 of operating an electronic notification system as disclosed herein. At 202, the application server 65 may receive user credentials from the user computing device 55. As described above, in some embodiments, the user credentials may be an access token granting authorization for the application server 65 to access the user account on the account server 70. At 204, the application server 204 may transmit the user credential to the account server 70 to establish access to the user account and begin monitoring the user account for account updates and activity. At 206, the application server 65 may receive activity category selections from the user computing device 55 reflecting the choices of the user 95 related to categories of account activity. In some embodiments, the user 95 need not make the selections and the application server 65 may proceed using default activity categories. At 208, the application server 65 may receive activity notification selections from the user computing device 55 reflective of the user's 95 preferences regarding when and why to receive activity notifications related to various activity categories.

At 210, once the application server 65 has been monitoring a user account on the account server 70, the application server may receive an account update from the account server indicating that an event has occurred related to the user account. Of course, although the disclosure generally describes activity in terms of a single user account related to a single user and a single computing device, those skilled in the art will understand that the application server 65 may monitor substantially any number of user accounts and provide notifications related to account activity to substantially any number of users and user computing devices. At 212, the application server 65 may analyze the received data related to the account update and determine whether the event triggering the account update falls into any activity categories for the notification account. At 214, if the account updated relates to activity in a first activity category, then, at 216, the application server may generate and transmit a first activity notification to the user computing device in the manner describe above with regard to Fig. 4. If, at 218, the account update relates to account activity falling within a second activity category, then the application server may, at 220, generate and transmit a second activity notification to the user computing device. In some embodiments, the first and/or second activity notifications may be transmitted as push notifications by the application server 65. In other words, the push notification of the activity notification may be sent by the electronic notification application even when the electronic notification application is not open or otherwise running on the user computing device 55. In some embodiments, the user 95 may select the push notification to be opened within the electronic notification application. In some embodiments, and depending on the user notification account preferences, the application server 65 may additionally compare the account update to any additional activity categories selected or included within the user notification account by default. In some embodiments, if the account updated does not fall into any activity category, the application server 65 may, at 219, store the account update and monitor the user account for additional account activity.

In some embodiments, at 222, the application server 65 may receive a notification response from the user computing device 55 related to a previously transmitted activity notification. For example, the notification response may include an instruction to cancel a pending transaction or to allow a pending transaction to proceed. In some embodiments, the instructions included in the notification response may be executable by the application server 65 at 224. In some embodiments, however, the application server 65 may instead forward the instructions on to the account server 70 or another location for execution.

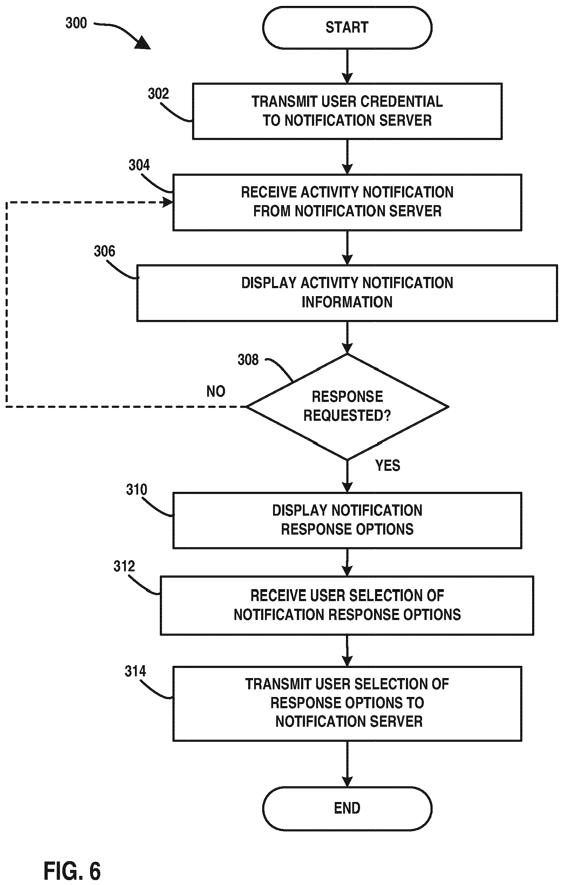

Fig. 6 illustrated an embodiment of a method 300 of using the electronic notification system described herein. In some embodiments, the electronic notification application running on the user computing device 55 may include processor-executable instructions issuable by the processor to transmit a user credential to an application server, such as application server 65. In some embodiments, the user computing device 55 may transmit user credentials to the application server 65. The user credential may be an access token providing access to a user account on the account server 70, or may be other credential information related to the user account such as a username and password. At 304, the user computing device 55 may receive one or more activity notifications from the application server 65. In some embodiments, the activity notification may correspond to an account update indicating activity related to the user account. At 306, the user computing device 55 may display information related to the activity notification on a display 56 of the user computing device so as to inform the user 95 of the triggering activity related to the user account. In some embodiments, the displaying may occur via the electronic notification application, or may occur via native notification applications on the user computing device, or other communication applications such as SMS or MMS messaging. In some embodiments, the activity notification may be pushed to the user computing device 55 from the application server 65 and display the activity notification on the user computing device regardless of whether the electronic notification application is running.

If no response to the activity notification is requested at 308, the electronic notification application may end the process or return to waiting to receive another activity notification. If a response to the activity notification is requested at 308, the user computing device 55 may display one or more notification response options. In some embodiments, the notification response options may be displayed as one or more buttons on a graphical user interface (GUI) selectable by the user to choose a desired notification response option. At 312, the user computing device 55 may receive the user selection of the notification response options. In response to receiving the user selection, at 314 the user computing device 55 may transmit the user selectin of the response options to the application server 65. In some embodiments, the response option may be configured to be sent along to another recipient, such as the account server 70 or the payment server 85. For example, if the activity notification is related to a payment due to a vendor or to another recipient, the response option may be configured to be forwarded to the payment server and configured to cause a payment to be executed to at least one payment recipient. In embodiments where the activity notification relates to potentially fraudulent activity related to the user account, the notification response option selected by the user may be forwarded on to the account server to take remedial action, such as canceling a transaction.

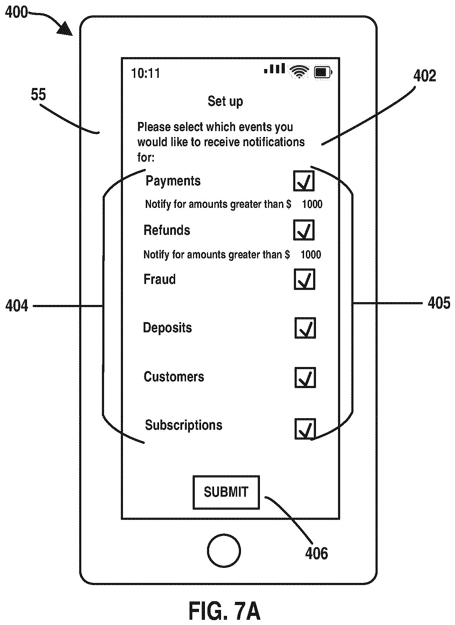

The electronic notification application may include a variety of display options, some or all of which may be presented to a user via a GUI displayed on the user computing device 55. Figs. 7A-7K illustrate sample screenshots of an embodiment of a GUI 400 related to the electronic notification application. Those skilled in the art will understand that the screenshots in the figures represent merely exemplary versions of a GUI for the electronic notification application and that other GUI configurations may also be consistent with the disclosure. Fig. 7A shows one embodiment of a set up menu 402 that may be used to select what activity categories 404 for which a user would like to received activity notifications. In the illustrated embodiment, activity categories 404 comprise Payments, Refunds, Fraud, Deposits, Customers, and Subscriptions. It should be understood, however, that many other activity categories may be used, and a user may decide to select all, none, or just some of any defined activity categories. In some embodiments, and as shown in Fig. 7A, each activity category may include a corresponding selection indicator 405, such as a selectable radio button or check-box, that a user may select (or de-select) in order to receive (or not receive) activity notifications relating to each activity category. In some embodiments, additional options may be available, such as to set a value threshold for receiving activity notifications in a particular activity category. For example, in Fig. 7A, the Payments and Refunds activity category each include a minimum value threshold of $1,000. It is contemplated herein, however, that this value threshold may be set at substantially any value. When a user has set up the activity notifications as desired, the user may select the submit button 406 to complete the set up process.

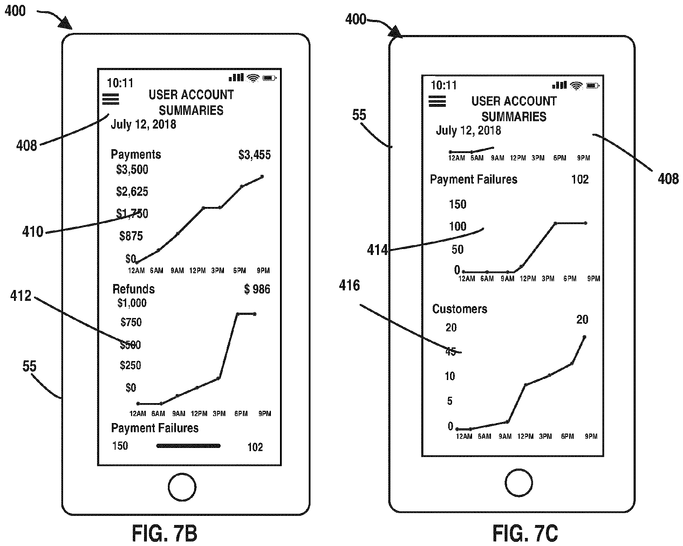

Figs. 7B and 7C illustrate embodiments of a user account summary screen 408 that may be used with the GUI 400. In some embodiments, the user account summary screen 408 may include graphs or other visual or data summaries of one or more categories of events or activities related to a user's electronic business. In some embodiments, the visual representations may correspond to aggregated data related to the selected activity categories, such as those shown in Fig. 7A, but need not be related. Figs. 7B and 7C show graphs illustrating summaries of various different activities that may be related to a user account. For example, the GUI 400 may include a payments summary graph 410, a refunds summary graph 412, a payment failures graph 414, and a customers summary graph 416. In some embodiments, the electronic notification application may provide additional, substantially real-time details related to payment failures so that a user may quickly identify and, in some instances, rectify the failed payments. One skilled in the art would understand that the GUI 400 may provide graphical or other visual representations for other types of account activity as well. Further, although the embodiment of the GUI 400 shown in Figs. 7B and 7C shows user account summaries for a single day, it is contemplated that user account summaries may be generated for other time periods, such as weeks, months, years, or custom time periods. Further, although the embodiment of the GUI 400 illustrates summaries using line graphs, it is contemplated that data related to the user account may be visually represented in any suitable way, such as with bar graphs, pie charts, etc.

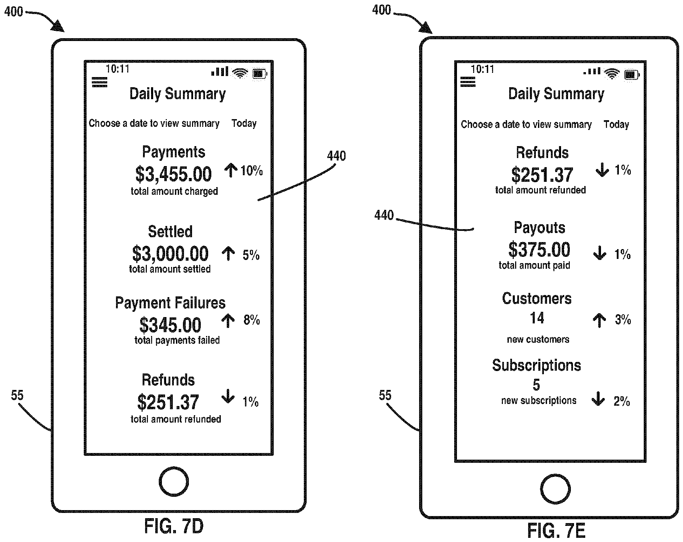

Figs. 7D and 7E show an embodiment of the GUI 400 including another visual representation of user account summary screen 440 showing summaries of various activities related to a user account. The exemplary GUI 400 shows daily totals for payments, settled amounts, payment failures, refunds, payouts, customers, and subscriptions. It should be understood, however, that more or fewer account activities may be summarized on the user account summary screen 440, and the summaries may cover multiple types of time periods. For the activities summarized in Figs. 7D and 7E, the user account summary screen 440 may show the total amounts of the values pertaining to the selected time period (e.g., day, week, month, year, etc.), and a percentage change. In some embodiments, the percentage change may be measured with respect to the previous time period, or with respect to the value at the beginning of the measured time period. In some embodiments, of the electronic notification application, a user may select which activities may be shown in the user account summary screen 440.

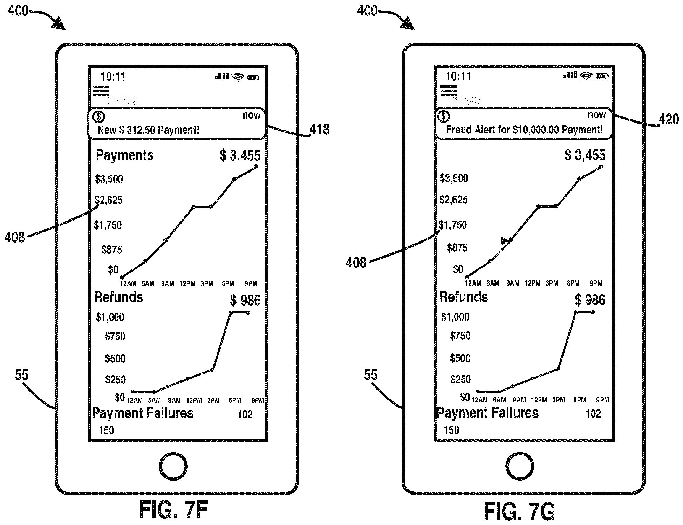

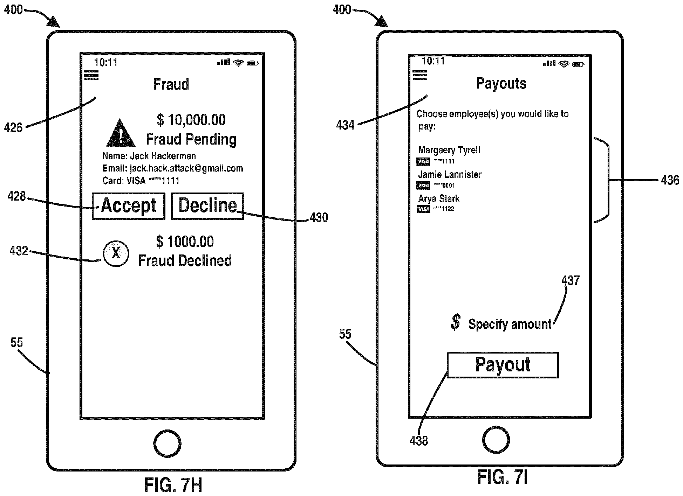

Figs. 7F and 7G show an embodiment of the GUI 400 that includes and embodiment of the user account summary screen 408 with examples of activity notifications overlaid on top of the summary screen. For example, Fig. 7F shows an example of a payment notification 418, and Fig. 7G shows an example of a fraud alert notification 420. In some embodiments, the activity notification may interrupt any other screen being shown by the GUI 400 and, in some embodiments, may be configured to interrupt other activities on the user computing device 55. In some embodiments, the activity notifications may be selectable to display additional information related to the particular notification, or provide options for selecting a notification response. For example, Fig. 7H illustrates an embodiment of the GUI 400 including a fraud detail screen 426. In some embodiments, the fraud detail screen 426 may be reached when a user selects a fraud-related activity notification such as the fraud notification 420 in Fig. 7D. In some embodiments, the fraud detail screen 426 may be displayed as the fraud notification itself along with options to select a notification response 428, 430. In some embodiments, the fraud detail screen 426 may include an accept button 428 and a decline button 430. A user may select the accept button 428 to, for example, accept the potentially fraudulent transaction, and may select the decline button 430 to decline the potentially fraudulent transaction. In some embodiments, the fraud detail screen 426 may include a fraud history portion 432 that may display previous fraudulent activity and how the user may have responded. Although a fraud detail screen 426 is shown in Fig. 7H, it is contemplated that other types of activities, such as payments or refunds, may also include detailed activity screens in some embodiments of the GUI 400

Fig. 7I illustrates an embodiment of the GUI 400 including a payouts screen 434. As described above, the electronic notification system described herein may, in some embodiments, utilized to make payments related to the user account. For example, a user who is running or otherwise associated with an electronic business may use the electronic notification application to make payments to employees, vendors, customers, etc. The embodiments of the payouts screen 434 in Fig. 7I illustrates an example of how the application may be used to make payments to electronic business employees. The payouts screen 434 may include a payment recipients list 436, where each potential recipient may be selectable to receive a payment. In some embodiments, the payouts screen 434 may include a payment amount entry field 437, where the user may enter the amount to pay the selected employees or other recipients. The user may then select a payout button 438 to complete payment. In other embodiments, the payment recipients list 436 may include vendors, other electronic businesses, utilities, or any other entity the electronic business may pay.

In some embodiments, the user may conduct payouts related to the user account relatively quickly using APIs, such as Visa Direct APIs. In such embodiments, the electronic notification application may leverage payout capabilities vis-à-vis a direct payment processor, such as Visa Direct or other suitable payment services. In such embodiments, once a user selects the payout button 438, the electronic notification application may interface with another payment service through APIs to complete the payout from the user account. In some embodiments, the electronic notification application may utilize pull and push for person-to-person payment operations.

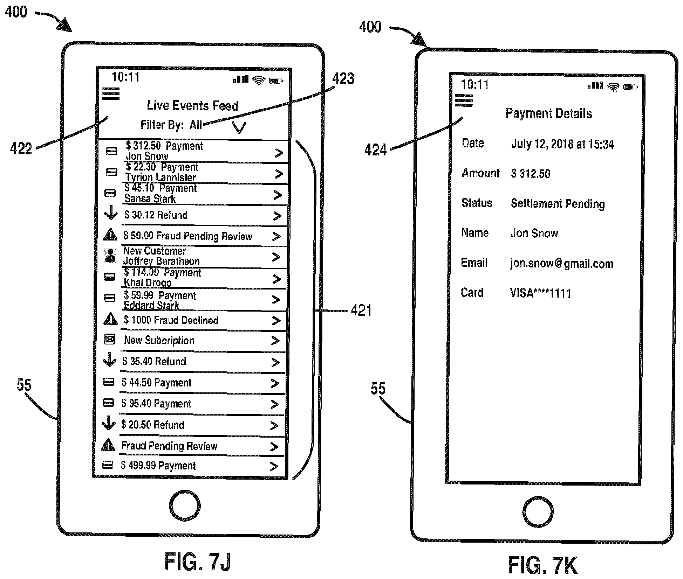

Some embodiments of the GUI 400 may include a live events feed 422, an example of which is illustrated in Fig. 7J. The live events feed 422 may include one or more events 421 or account updates related to the user account that the application server 65 and electronic notification application has received and logged. In some embodiments, the live events feed 422 may update in substantially real time as new account updates are received and categorized into the appropriate activity categories. In some embodiments, the live events feed 422 may be filtered using a filter field 423. For example, if a user may adjust the filter field 423 to show only payments, or only fraud alerts, etc. In some embodiments, the individual events 421 in the live events feed 422 may be selectable to display additional details related to the selected event. For example, Fig. 7K illustrates an exemplary event details screen 424 that may be displayed when a user selects an event 421 from the live events feed 422 related to a payment. The event details screen 424 may include details regarding the particular event, such as date, amount, status, name of customer or other entity, contact information, credit card number or portions thereof, etc. Although the event details screen 424 shows details related to a payment event, one skilled in the art would understand that other types of events may include corresponding event details on a similar even details screen.

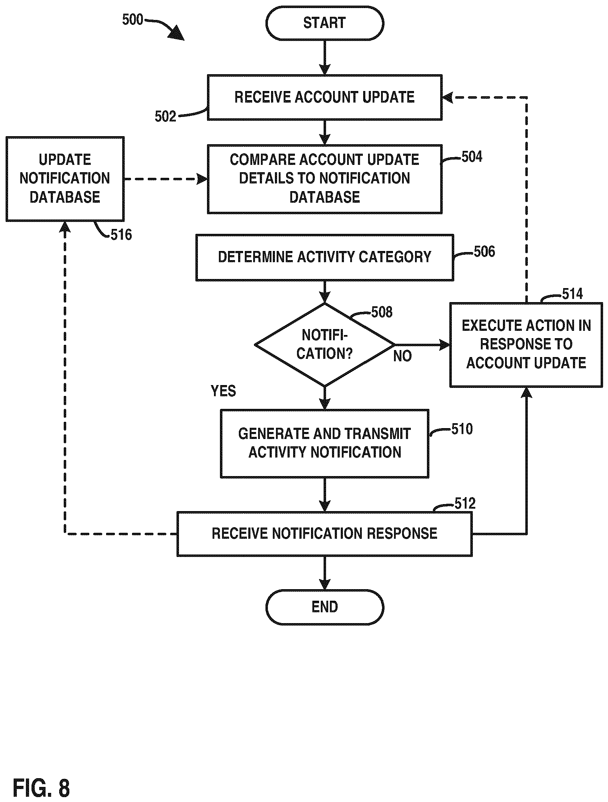

In some embodiments, the electronic notification system may utilize machine learning or other artificial intelligence to maximize efficiency in determining whether particular types of transactions related to a user account should be flagged as potentially fraudulent, be denied based on learned criteria, or accepted based on prior user responses. Fig. 8 illustrates an example embodiment of a method 500 for implementing the electronic notification system utilizing machine learning. At 502, the application server, such as application server 65, may receive an account update for an event or activity related to a user account. In some embodiments, the account update may be received from another server or other entity, such as the account server 70, but may also be received based on activity in a user account associated with the application server itself. In some embodiments, the account update may include account update details, such as the amount of a transaction, the type of payment method used, the item or service purchased, customer information, location of transaction, etc. At 504, the application server 65 may compare account update details of the account update to a database of prior account updates, such as a notification database. At 506, the application server 65 may determine which (if any) activity category the account update may fall into based on the account update details and the comparison to the data in the notification database. Based on the activity category determined, the application server 65 may, at 508, determine whether an activity notification should be sent to a user computing device. If no activity notification is required, either due to user preferences or because the application server 65 has determined that no user feedback is needed, the server may, at 514, execute appropriate action in response to the user update, if any. If an activity notification should be sent, then the application server 65 may transmit an appropriate activity notification to the user computing device at 510. At 512, the application server 65 may receive notification response from the user computing device indicating the user's selection to respond. At 516, the notification database may be updated with new data or information reflective of the user's notification response and account updated details.

The notification database may be included on the application server, or may be hosted elsewhere. The notification database may include data and information related to prior account updates, the activity categories (if any) the prior account update fell into, the nature of the notification response from the user, and other details. For example, if an account update had been categorized as "potentially fraudulent" but the user responds "accept," this data may be included in the notification database for reference in subsequent account updates. If subsequent account updates share particular details or other characteristics with the potentially fraudulent action update that the user has deemed acceptable, the application database may learn by taking those responses into consideration. Thus, the application database may learn to better categorize account updates through an iterative machine learning process.

In some embodiments, the application server 65 may, over time and through receiving many responses from the user, determine that a response from the user for particular account updates may not be needed. In some embodiments, the application server 65 may track the accuracy of the determination of an activity category over time, such as on a rolling average or other score-keeping method. If, for example, the application server 65 determines that it assigns a fraudulent category to account updates having a particular profile with a threshold level of accuracy (e.g., 85%, 90%, 95%, 99%, etc.), the application server may, at 508, determine not to request a response from the user and instead simply proceed with executing an appropriate action at 514. In some embodiments, the user may determine at what level to set the minimum accuracy threshold level for particular categories or types of account updates. For example, the user may prefer the application server 65 to provide an automatic response for potentially fraudulent transactions below a particular transaction amount threshold (e.g., $500) when the application server 65 has reached a 95% accuracy level. However, the user may prefer the application server request a user response for potentially fraudulent transactions above the transaction amount threshold unless the application server 65 has reached a 99% accuracy level. Of course, in some embodiments, the user may set threshold amounts and accuracy levels as desired for particular categories.

The various participants and elements described herein may operate one or more computer apparatuses to facilitate the functions described herein. Any of the elements in the above-described Figures, including any servers, user terminals, or databases, may use any suitable number of subsystems to facilitate the functions described herein.

Any of the software components or functions described in this application, may be implemented as software code or computer readable instructions that may be executed by at least one processor using any suitable computer language such as, for example, Java, C++ or Perl using, for example, conventional or object-oriented techniques. In some examples, the at least one processor may be specifically programmed.

The software code may be stored as a series of instructions, or commands on a non-transitory computer readable medium, such as a random access memory (RAM), a read only memory (ROM), a magnetic medium such as a hard-drive or a floppy disk, or an optical medium such as a CD-ROM. Any such computer readable medium may reside on or within a single computational apparatus, and may be present on or within different computational apparatuses within a system or network.

It may be understood that the present invention as described above can be implemented in the form of control logic using computer software in a modular or integrated manner. Based on the disclosure and teachings provided herein, a person of ordinary skill in the art may know and appreciate other ways and/or methods to implement the present invention using hardware and a combination of hardware and software.

The above description is illustrative and is not restrictive. Many variations of the invention will become apparent to those skilled in the art upon review of the disclosure. The scope of the invention should, therefore, be determined not with reference to the above description, but instead should be determined with reference to the pending claims along with their full scope or equivalents.

One or more features from any embodiment may be combined with one or more features of any other embodiment without departing from the scope of the invention. A recitation of "a", "an" or "the" is intended to mean "one or more" unless specifically indicated to the contrary.

One or more of the elements of the present system may be claimed as means for accomplishing a particular function. Where such means-plus-function elements are used to describe certain elements of a claimed system it will be understood by those of ordinary skill in the art having the present specification, figures and claims before them, that the corresponding structure is a general purpose computer, processor, or microprocessor (as the case may be) programmed (or physically configured) to perform the particularly recited function using functionality found in any general purpose computer without special programming and/or by implementing one or more algorithms to achieve the recited functionality. As would be understood by those of ordinary skill in the art that algorithm may be expressed within this disclosure as a mathematical formula, a flow chart, a narrative, and/or in any other manner that provides sufficient structure for those of ordinary skill in the art to implement the recited process and its equivalents.

While the present disclosure may be embodied in many different forms, the drawings and discussion are presented with the understanding that the present disclosure is an exemplification of the principles of one or more inventions and is not intended to limit any one of the inventions to the embodiments illustrated.

The present disclosure provides a solution to the long-felt need described above. In particular, the system and the methods described herein may be configured to efficiently provide substantially real-time information and notifications related to a user's electronic business so that, among other things, the user may quickly and efficiently respond or otherwise address issues. Further advantages and modifications of the above described system and method will readily occur to those skilled in the art. The disclosure, in its broader aspects, is therefore not limited to the specific details, representative system and methods, and illustrative examples shown and described above. Various modifications and variations can be made to the above specification without departing from the scope of the present disclosure, and it is intended that the present disclosure covers all such modifications and variations provided they come within the scope of the following claims and their equivalents.

## Claims

1. A processor-implemented method for providing electronic updates, the method comprising:
receiving, by one or more processors via a digital communication network, a user credential associated with a user account of a user;
transmitting, by the one or more processors via the digital communication network, the user credential to an account server to gain access to the user account on the account server;
receiving, by the one or more processors via the digital communication network, at least one account update from the account server, each of the at least one account update relating to activity in the user account;
determining, by the one or more processors, that each of the at least one account update is associated with one of a plurality of activity categories including a first activity category and a second activity category;
based on a determination that the at least one account update is associated with the first activity category, generating, by the one or more processors, a first activity notification; and
in response to receiving the at least one account update, pushing, by the one or more processors via the digital communication network, the first activity notification to a user computing device, the first activity notification configured to trigger a notification on the user computing device.

2. The method of claim 1, wherein the first activity notification is transmitted to the user computing device without any additional input from the user computing device.

3. The method of any preceding claim, wherein the first activity notification is pushed to the user computing device in substantially real time.

4. The method of any preceding claim, wherein the user credential is an access token.

5. The method of any preceding claim, wherein the user credential is received from the user computing device.

6. The method of any preceding claim further comprising:
receiving, by the one or more processors via the digital communication network, a notification response in response to the first activity notification, the notification response including instructions related to the at least one account update.

7. The method of any preceding claim further comprising:
receiving, by the one or more processors via the digital communication network, a payment instruction to transmit a payment to at least one payment recipient from the user computing device; and
transmitting, by the one or more processors via the digital communication network, the payment instruction to a payment server, the payment instruction configured to trigger payment to an account associated with the at least one payment recipient.

8. The method of claim 1, wherein the at least one account update is received via an HTTP POST request.

9. A processor-readable non-transitory medium storing processor-executable instructions, that when executed by a processor cause the processor to:
transmit, via a digital communication network, a user credential to an application server, the user credential associated with a user account;
receive, via the digital communication network, an activity notification from the application server, the activity notification corresponding to an account update indicating activity related to the user account;
display information related to the activity notification, the activity notification providing a plurality of notification response options;
receive a user selection of one of the plurality of notification response options; and
based on receiving the user selection, transmit, via the digital communication network, the user selection of one of the plurality of notification response options to the application server.

10. The processor-readable medium of claim 9 further comprising storing processor-executable instructions issuable by the processor to:
receive a summary of one or more account updates related to the user account; and
display a graphical depiction of the summary of one or more account updates related to the user account.

11. The processor-readable medium of claim 9 or 10, wherein at least one of:
the user selection of one of the plurality of notification response options includes an instruction to transmit payment to at least one payment recipient related to the activity notification; and
the activity notification is received as a push notification.

12. The processor-readable medium of any of claims 9 to 11 further comprising storing processor-executable instructions issuable by the processor to:
receive one or more additional activity notifications from the application server corresponding to one or more additional account updates;
aggregate data relating to the activity notification and the one or more additional activity notifications; and
display a graphical representation of the aggregated data via a graphical user interface.

13. The processor-readable medium of claim 12, wherein the aggregated data is updated in substantially real time.

14. The processor-readable medium of any of claims 9 to 13 further comprising storing processor-executable instructions issuable by the processor to:
receive one or more additional activity notifications from the application server corresponding to one or more additional account updates; and
display the activity notification and the one or more additional activity notifications in a substantially real time events feed via a graphical user interface.

15. An application server comprising:
a processor; and
a computer readable medium comprising instructions, wherein the processor is configured to execute the instructions to perform the method of any of claims 1 to 8.
